# EUROPEAN PATENT APPLICATION

(11) **EP 3 425 443 A1**
(43) Date of publication of application: **09.01.2019**
(21) Application number: 17179998.4
(22) Date of filing: 06.07.2017
(51) Int. Cl.: G02C 7/04, G02B 5/00, G02B 26/00

(54) **CONTACT LENS COMPRISING AN ELECTROWETTING VARIABLE APERTURE**

(71) Applicant: Nokia Technologies Oy, 02610 Espoo (FI)
(72) Inventor: Kimmel, Jyrki, 33180 Tampere (FI)
(74) Representative: Espatent Oy

(57) **Abstract**

A contact lens comprising a lens body comprising a first substrate and a second substrate on top of each other with a space between the first substrate and the second substrate, a first fluid in the space between the first substrate and the second substrate, a reservoir for containing a second fluid, wherein opacity of the second fluid is different from opacity of the first fluid, and an electrowetting control structure configured controllably move the first and second fluids within the contact lens to control an aperture in the contact lens.

## Description

### TECHNICAL FIELD

The present application generally relates to contact lenses.

### BACKGROUND

This section illustrates useful background information without admission of any technique described herein representative of the state of the art.

Development of smart contact lenses is one emerging technology area at the time of writing this document. In general the term smart contact lens refers to a contact lens that comprises electronic components to provide some desired functionality.

### SUMMARY

Various aspects of examples of the invention are set out in the claims.

According to a first example aspect of the present invention, there is provided a contact lens comprising:
a lens body comprising a first substrate and a second substrate on top of each other with a space between the first substrate and the second substrate,
a first fluid in the space between the first substrate and the second substrate,
a reservoir for containing a second fluid, wherein opacity of the second fluid is different from opacity of the first fluid, and
an electrowetting control structure configured controllably move the first and second fluids within the contact lens to control an aperture in the contact lens.

In an embodiment, the electrowetting control structure is configured to cause a continuous change in size of the aperture in the contact lens by movement of the fluids.

In an embodiment, the electrowetting control structure is configured to drive the second fluid to the space between the first substrate and the second substrate so that the second fluid at least partially replaces the first fluid in the space between the first substrate and the second substrate.

In an embodiment, the electrowetting control structure comprises electrodes in the space between the first substrate and the second substrate, the electrodes being configured to
drive at least part of the second fluid from the reservoir to the space between the first substrate and the second substrate in response to voltage being applied to the electrodes, and
release the second fluid back into the reservoir in response to the voltage applied to the electrodes being reduced.

In an embodiment, the electrodes have a spiral shape. In an embodiment, the electrodes have a spiral shape with a gradually decreasing diameter. In an embodiment, the electrodes have a curved shape.

In an embodiment, the electrodes comprise a first electrode mounted on an inner surface of the first substrate and a second electrode mounted on an inner surface of the second substrate.

In an embodiment, the electrowetting control structure is configured to control the aperture in the contact lens in response to a control signal.

In an embodiment, the electrowetting control structure is configured to receive the control signal from a mobile application.

In an embodiment, the contact lens is configured to provide automatic control of the aperture in the contact lens based on ambient light conditions.

In an embodiment, the electrowetting control structure is configured to automatically control the aperture in the contact lens in response to a control signal received from a sensor configured to sense ambient light level. The sensor may be comprised by the contact lens. Alternatively the sensor may be an external sensor.

In an embodiment, the first fluid is clear and the second fluid is black. In other embodiments, other colours and transparencies are used.

In an embodiment, the reservoir is located in an outer rim of the lens body.

In an embodiment, the contact lens further comprises a wireless charging circuitry.

In an embodiment, the contact lens comprises two or more of said reservoirs for containing the second fluid. The contact lens may comprise separate electrodes for each reservoir.

According to a second example aspect of the present invention, there is provided a method in a contact lens comprising a first substrate and a second substrate, a first fluid in a space between the first substrate and the second substrate, a reservoir for containing a second fluid, wherein opacity of the second fluid is different from opacity of the first fluid, and an electrowetting control structure. The method comprises
automatically controlling size of an aperture in the contact lens by moving the first and second fluids within the contact lens by the electrowetting control structure.

In an embodiment, the automatic controlling of the aperture size is performed based on detected ambient light conditions.

According to a third example aspect of the present invention there is provided a computer program comprising computer executable program code configured to execute the method of the second example aspect.

The computer program may be stored in a non-transitory computer readable memory medium. Such memory medium may comprise a digital data storage such as a data disc or diskette, optical storage, magnetic storage, holographic storage, opto-magnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 shows a contact lens according to an example embodiment;
Fig. 2 shows a contact lens according to another example embodiment;
Fig. 3 shows a cross section of an example contact lens;
Fig. 4 shows an example electronic circuitry; and
Fig. 5 shows a flow chart of a process of an example embodiment.

### DETAILED DESCRIPTON OF THE DRAWINGS

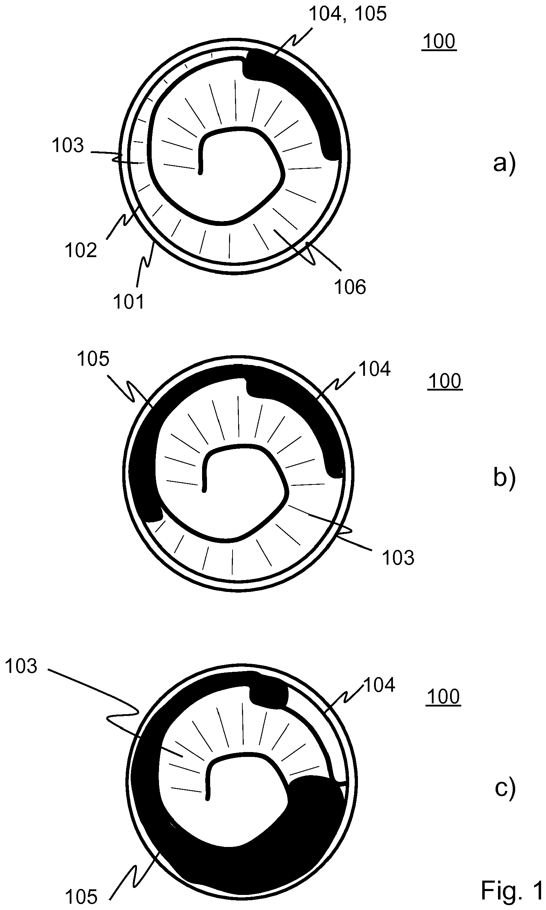

Example embodiments of the present invention and its potential advantages are understood by referring to Figs. 1 through 5 of the drawings. In this document, like reference signs denote like parts or steps.

In various example embodiments of the invention there is provided a contact lens. The contact lens may be referred to as a smart contact lens. More specifically the contact lens comprises electrowetting technology, which is being used for forming and controlling an aperture in the contact lens. As an alternative definition, one may say that the electrowetting technology is used for controlling a shutter in the contact lens. The shutter forms the aperture in the contact lens. The contact lens comprises two fluids with different opacity, e.g. one transparent or clear and one black or non-transparent, and electrowetting technology is used for moving these fluids in the contact lens to control the amount of light that is allowed to pass through the contact lens. The fluids are moved so that an aperture is formed in the contact lens, and the size of the aperture is controlled by moving the fluids to desired position in relation to each other. In this way also opacity of the contact lens can be adjusted. In this way one may control the amount of light entering the eye of a user of the contact lens.

Controlling the amount of light entering the eye of a user may be needed for example for medical purposes. There are diseases that affect the iris in human eyes, such as congenital aniridia (missing iris) or iris coloboma (hole in iris). Patients suffering from such a condition are susceptible to overexposure of the retina and resulting loss of visual acuity, sometimes even in low ambient light situations. The contact lenses with adjustable aperture can be used for avoiding or reducing the overexposure or other problems.

Alternatively or additionally, the contact lenses can be used instead of sunglasses to control the exposure to ambient light. This use case is applicable also for people without medical needs to adjust the amount of light entering their eyes.

In general, the term electrowetting refers to modification of the wetting properties of a surface (which is typically hydrophobic) with an applied electric field. Thereby electrowetting technology can be used for electronically moving a volume of a suitable fluid.

A contact lens according to an embodiment comprises a lens body comprising a first substrate and a second substrate. Alternatively, the first and second substrates may be referred to as lower and upper substrates. The substrates are placed on top of each other and there is a space between them. The substrates forming the lens body may be made of hard lens material or soft lens material. The substrates may be made of plastic, such as polycarbonate, for example.

There is a quantity of a first fluid in a space between the first substrate and the second substrate, and a quantity of a second fluid in a reservoir. The reservoir may be positioned in the first or second substrate or between them or even outside the substrates on a suitable support structure. The reservoir is configured to have a connection to the space between the substrates so that fluid may flow from the reservoir to the space between the substrates and vice versa. In an embodiment the reservoir is positioned in the outer rim of the contact lens. In this way one may achieve that the reservoir does not obscure the view through the contact lens or that at least any obscuring effect is minimal.

Opacity of the second fluid is different from opacity of the first fluid. The first fluid is for example transparent and the second fluid is opaque, or vice versa. It is noted that it is not mandatory that one of the fluids is completely opaque or completely transparent. Instead it suffices that there is difference in opacity of the fluids. In an embodiment the first fluid is clear and the second fluid is black, or vice versa. The second fluid may be dyed to have the desired colour (e.g. black). By using a black fluid one achieves a colour that matches the colour of the pupil. The first and the second fluids may have refractive indices identical or very close to each other. In this way, the movement of the fluids in the contact lens does not affect the refracting power of the contact lens.

The contact lens further comprises an electrowetting control structure that controllably moves the fluids within the contact lens. The electrowetting control structure for example drives at least part of the second fluid from and to the reservoir to form an aperture in the contact lens and to control the size of the aperture. Thereby also opacity of the contact lens is controlled as changing the size of the aperture in the contact lens changes opacity of the contact lens at least partially. In an embodiment there is an electrode or electrodes in the space between the first and second substrates. There may be one electrode on a surface of the first substrate and second electrode on a surface of the second substrate. When voltage is applied to the electrode(s) at least part of the second fluid is driven from the reservoir to the space between the first and second substrates. When voltage is reduced or voltage is no longer applied to the electrodes, the second fluid is driven back to the reservoir. The electrode(s) may be transparent to avoid obscuring the view through the contact lens. Alternatively or additionally, the electrode(s) may be made of flexible material.

The electrodes may have a spiral shape, a circular shape, a curved shape or some other suitable shape. In an embodiment there are more than one reservoir for the second fluid. There may be for example two, three or more reservoirs. There may be separate electrowetting electrodes for each reservoir and all electrodes may be controlled the same way or each electrode may be controlled separately.

In an embodiment the second fluid replaces at least part of the first fluid in the space between the first and second substrates. There may be for example another reservoir for the first fluid or the first fluid may be driven to the reservoir that initially stores the second fluid.

In an embodiment the second fluid is moved in response to a control signal. The control signal may be received for example from a mobile application or some other remote control entity. In this way, a user adjustable solution is provided.

In an embodiment there is an automatic control of the aperture of the contact lens based on ambient light conditions. For example, the second fluid may be automatically moved in response to a control signal received from a sensor configured to sense the ambient light level. In an embodiment the sensor configured to sense the ambient light level is part of the contact lens. In another embodiment the sensor is an external sensor located somewhere else, e.g. in a mobile device, watch or glasses of the user or in other remote device. In this way, aperture of the contact lens is automatically adjusted in proportion to ambient light level. In an example implementation, there is a predefined delay in the automatic control so that sudden, sort-term changes in ambient light conditions do not necessarily cause changes in the contact lens.

Fig. 1 shows a contact lens 100 according to an example embodiment. The contact lens 100 comprises a first substrate 101 and a second substrate 102. These form a contact lens body. There is a space between the first and second substrates 101, 102 and this space comprises a quantity of a first fluid 103. Further the contact lens 100 comprises a reservoir 104 located in outer rim of the lens body. The reservoir 104 comprises a quantity of a second fluid 105. Opacity of the first and second fluids 103, 105 is different from each other.

In an example embodiment, the reservoir 104 is at least partially formed in the first substrate 101 and the depth of the reservoir 104 is greater than the depth of the space between the first and second substrates 101, 102. Form of the reservoir may follow the form of the rim of the lens body. The reservoir may have for example a longitudinal form extending along the rim of the lens body. In an embodiment the second substrate is smaller than the first substrate to accommodate electronics on top of the first substrate, but this is clearly only one option and also other implementations are possible.

Further the contact lens comprises an electrode 106 in the space between the first and second substrates 101, 102. In this example, the electrode has a spiral form with a gradually decreasing diameter towards the centre of the contact lens. The electrode 106 may comprise two spiral electrodes on top of each other even though Fig 1 shows only one electrode. The electrodes may be mounted on inner surfaces of the first and second substrates 101, 102. The electrodes may be transparent and/or flexible.

In the following, the operation of the contact lens 100 is discussed. In this discussion it is assumed that the first fluid is transparent or clear and the second fluid is black. It is noted though that this is not the only option and different colours and transparencies of the fluids may be used. In 1 a) the contact lens is in initial state and the second fluid 105 is stored in the reservoir 104. Thereby the contact lens is transparent. This setting is suited for example for situations with little or no ambient light. In an embodiment the contact lens automatically adjusts or returns to this setting in response to detection of low ambient light level or in response to detection of darkness.

In 1 b) a voltage is being applied to the electrodes 106 and the second fluid is partly drawn between the spiral electrodes 106. This setting is suited for example for situations with increased ambient light level. In an embodiment, the contact lens automatically adjusts to this setting in response to increased ambient light level.

In 1 c) a greater voltage than in 1 b) is being applied to the electrodes 106 and the second fluid is almost completely drawn out of the reservoir. This setting is suited for example for situations with further increased ambient light level. In an embodiment, the contact lens automatically adjusts to this setting in response to further increased ambient light level.

The spiral form of electrodes with gradually decreasing diameter causes that the path of the second fluid progressively fills the aperture from the outside in. This form is suited for changing aperture size of the contact lens, as this form allows gradually decreasing the diameter of the aperture of the contact lens. The spiral form allows causing a continuous change in the diameter of the aperture without a need to set predefined sizes for the aperture. It is noted that also other electrode shapes may be used.

It is to be noted that the movements of the second fluid can be continuously adjusted to correspond to the sensed ambient light level. Another alternative is stepwise adjustment. The movements of the second fluid may be controlled by an analogue signal providing a certain voltage level, or by a digital signal that is converted to discrete voltage levels.

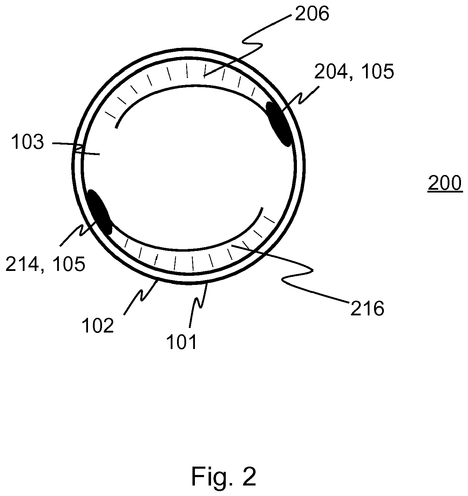

Fig. 2 shows a contact lens 200 according to another example embodiment. The contact lens 200 comprises a first substrate 101 and a second substrate 102. These form a contact lens body. There is a space between the first and second substrates 101, 102 and this space comprises a quantity of a first fluid 103. Further the contact lens 200 comprises two reservoirs 104, 214 located in outer rim of the lens body. The reservoirs 204, 214 each comprise a quantity of a second fluid 105. Opacity of the first and second fluids 103, 105 is different from each other.

In an example embodiment, the reservoirs 204, 214 are at least partially formed in the first substrate 101 and the depth of the reservoirs 204, 214 may be greater than the depth of the space between the first and second substrates 101, 102. Form of the reservoirs may follow the form of the rim of the lens body. The reservoirs may have for example a longitudinal form extending along the rim of the lens body. In an embodiment the second substrate is smaller than the first substrate to accommodate electronics on top of the first substrate, but this is clearly only one option and also other implementations are possible.

Further the contact lens comprises electrodes 206, 216 in the space between the first and second substrates 101, 102. In this example, the electrodes have a curved form. The electrodes may comprise two electrodes on top of each other on both electrode locations. The electrodes may be mounted on inner surfaces of the first and second substrates 101, 102. The electrodes may be transparent and/or flexible.

The contact lens 200 may be configured to operate in a similar manner as the contact lens 100 of Fig. 1 except that in contact lens 200, the second fluid is moved to and from two separate reservoirs 204, 214. It is to be understood that likewise even more than two reservoirs and associated electrodes can be used.

The curved form of electrodes is well suited for changing the aperture size of the contact lens as this form allows decreasing the diameter of the aperture of the contact lens.

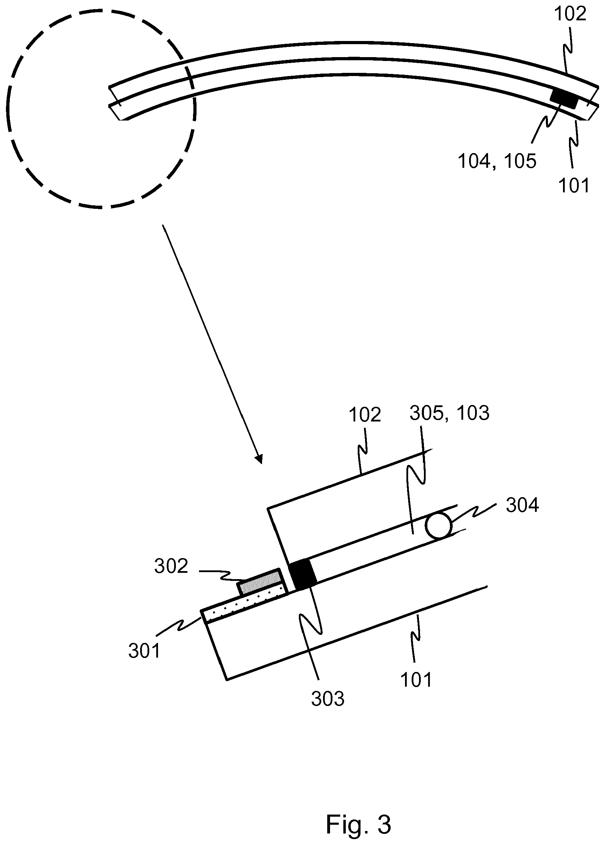

Fig. 3 shows a cross section of an example contact lens. The contact lens may be for example the contact lens 100 of Fig. 1 or the contact lens 200 of Fig. 2. The contact lens comprises a first substrate 101 and a second substrate 102. These form a contact lens body. The lens body is curved spherically to conform to the surface of an eye. Further the contact lens comprises a reservoir 104 located in outer rim of the lens body. The reservoir 104 comprises a quantity of a second fluid 105.

Fig. 3 shows a spherical lens. In another embodiment, the contact lens entity 100 or 200 of Figs. 1 and 2 may have a compound form factor, wherein the contact lens shape differs from spherical and uniform curvature. In this way the contact lens may be used for simultaneously correcting the refractive power of the cornea in order to affect the user's visual acuity. For example, the lens may be fabricated so that the compound refractive power has negative or positive diopters, and the front and/or back surfaces of the contact lens may be aspherical.

The first and second substrates 101 and 102 are separated from each other by spacers 304. That is, there is a space 305 between the first and second substrates 101 and 102. This space 305 is for example few micrometres in depth. The space 305 accommodates electrowetting electrodes (not shown in Fig. 3) and electrowetting fluids. The electrowetting electrodes may be mounted on inner surfaces of the first and second substrates 101, 102. Further there is an edge seal 303 that closes the space 305 between the substrates. The space comprises a quantity of a first fluid 103. Depending on the operation mode of the contact lens, the space 305 may additionally or alternatively comprise a quantity of the second fluid 105. The edge seal ensures that the fluids stay within the space between the substrates.

Still further there are electronic components 302 as well as connectors and printed circuit wires 301 mounted on top of the first substrate 101 near the outer rim. In an embodiment the electronic components 302 comprise electrowetting control circuitry. Additionally, the electronic components 302 may comprise a sensor configured to sense ambient light.

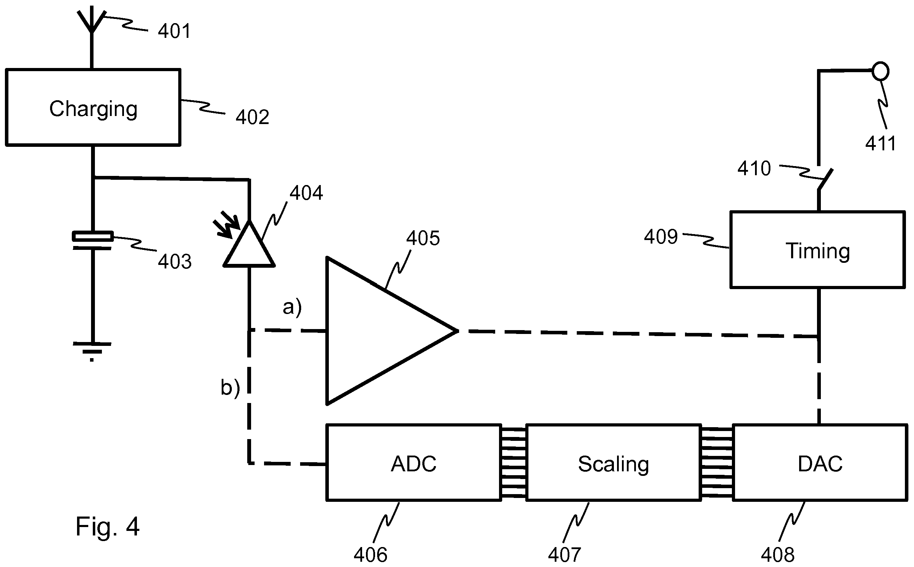

Fig. 4 shows an example electronic circuitry. The shown electronic circuitry may be included in the electronics 302 of Fig. 3. It is however not mandatory that all components of Fig. 4 be included in the electronics 302 of Fig. 3. The circuitry comprises a charging antenna 401 connected to a charging circuit 402, which is connected to a storage capacitor 403 and operable to store energy received through the charging antenna 401 into the storage capacitor 403. The components 401-403 form a wireless charging circuitry for charging the electronics of the contact lens. The charging may be done for example when the user is not wearing contact lenses (e.g. overnight). Fig. 4 shows a wireless charging circuitry. That is, charging the electronics of the contact lens may be done wirelessly. This may be performed even when the contact lens is in use and if desired, the contact lens may be charged continuously. This may be performed through an external antenna that is tuned to transmit signal to the charging antenna 401. The external antenna may be implemented in an eyeglass frame or in a mobile device or in some remote control entity. Alternatively or additionally, the charging may require physical contact. E.g. some charging surface may be used.

Further the circuitry of Fig. 4 comprises an ambient light sensor 404. Output of the ambient light sensor 404 is connected to a timing circuit 409 through a branch a) or b). The timing circuit is connected to output 411 through a latch 410. The output 411 provides voltage to the electrowetting electrode.

The branch a) is an analogue control branch that comprises a scaling amplifier 405. The branch b) is a digital control branch that comprises an analogue-to-digital converter 406 connected to a scaling circuit 407, which is connected to a digital-to-analogue converter 408. It is to be noted that branches a) and b) are alternatives and both are not necessarily needed.

Combination of components 404-405 and 409-410 of Fig. 4 forms one example of a control circuitry for controlling aperture of the contact lens and especially the size of the aperture of the contact lens. Combination of components 404 and 406-410 of Fig. 4 forms another example of a feedback loop for controlling aperture of the contact lens.

In operation, the ambient light sensor 404 drives the scaling amplifier 405 and the scaling amplifier 405 sets voltage for the electrowetting electrodes based on the output of the ambient light sensor 404. In an example the scaling amplifier 405 sets voltage between top and bottom electrowetting electrodes of the contact lens to drive the second fluid in a desired manner.

In branch b), the output of the ambient light sensor 404 is fed to an analogue-to-digital converter and the resulting digital signal is scaled in the scaling circuit 407 to discrete signal steps that result in a physiologically meaningful optoelectronic response to drive the electrowetting electrodes to drive the second fluid in a desired manner. The digital-to-analogue converter 408 returns the signal to analogue form.

The timing circuit 409, which may comprise for example an analogue filter, a phase-locked loop, or a digital timer, determines a time constant for the response from branch a) or branch b). That is, the timing circuit 409 implements delay in the control circuit. The resulting voltage is then latched on the electrowetting electrodes through the latch 410 and output 411. The delay implemented in the timing circuit allows that the system does not react to brief changes in the ambient lighting. In this way sudden, sort-term changes in ambient light conditions do not necessarily cause changes in the contact lens.

The electrowetting fluid stays in place with the charge applied to the electrowetting electrodes. Therefore the circuit has inherently low leakage current and the system can be described as mono-stabile, which means that the electrowetting fluid interface stays in place as long as the voltage across the electrodes is maintained.

It is noted that details disclosed in connection with one figure or one embodiment may be combined to embodiments of other figures.

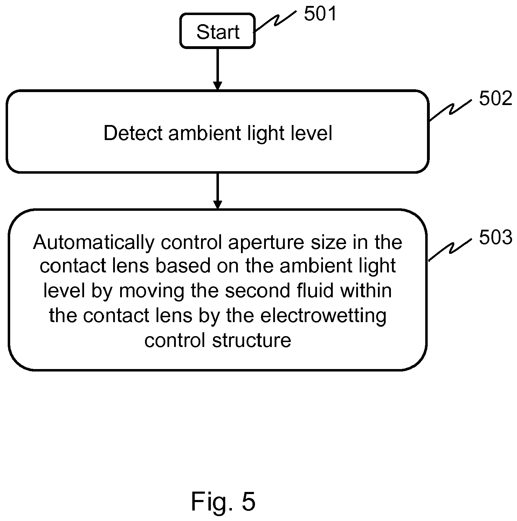

Fig. 5 shows a flow chart of a process of an example embodiment. The process may be used for example in one of the foregoing contact lenses or some other contact lens that comprises a lens body comprising a first substrate and a second substrate, a quantity of a first fluid in a space between the first substrate and the second substrate, a reservoir comprising a quantity of a second fluid, wherein opacity of the second fluid is different from opacity of the first fluid, and an electrowetting control structure configured controllably move the fluids within the contact lens.
501: The process is started.
502: Level of ambient light is detected. This may be done for example by a sensor implemented in the contact lens.
503: Size of an aperture in the contact lens is automatically controlled by moving the second fluid within the contact lens. The controlling may be done based on the ambient light level. An electrowetting control structure is used for causing the movement of the second fluid. In an embodiment controlling the size of the aperture is used for controlling opacity of the contact lens.

Without in any way limiting the scope, interpretation, or application of the claims appearing below, a technical effect of one or more of the example embodiments disclosed herein is a new type of smart contact lens with an adjustable aperture.

Another technical effect of one or more of the example embodiments disclosed herein is that automatic adjustment is provided. Another technical effect of one or more of the example embodiments disclosed herein is that the contact lens automatically adjusts to ambient light conditions.

Another technical effect of one or more of the example embodiments disclosed herein is that a relatively simple architecture may be used. For example smart contact lenses that are based on elementary liquid crystal technology may require higher voltages and more complicated waveforms than present embodiments.

If desired, the different functions discussed herein may be performed in a different order and/or concurrently with each other. Furthermore, if desired, one or more of the before-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications, which may be made without departing from the scope of the present invention as defined in the appended claims.

## Claims

1. A contact lens comprising:
a lens body comprising a first substrate and a second substrate on top of each other with a space between the first substrate and the second substrate,
a first fluid in the space between the first substrate and the second substrate,
a reservoir for containing a second fluid, wherein opacity of the second fluid is different from opacity of the first fluid, and
an electrowetting control structure configured controllably move the first and second fluids within the contact lens to control an aperture in the contact lens.

2. The contact lens of claim 1, wherein the electrowetting control structure is configured to cause a continuous change in size of the aperture in the contact lens by movement of the fluids.

3. The contact lens of claim 1 or 2, wherein the electrowetting control structure is configured to drive the second fluid to the space between the first substrate and the second substrate so that the second fluid at least partially replaces the first fluid in the space between the first substrate and the second substrate.

4. The contact lens of claim 1, 2 or 3, wherein the electrowetting control structure comprises electrodes in the space between the first substrate and the second substrate, the electrodes being configured to
drive at least part of the second fluid from the reservoir to the space between the first substrate and the second substrate in response to voltage being applied to the electrodes, and
release the second fluid back into the reservoir in response to the voltage applied to the electrodes being reduced.

5. The contact lens of claim 4, wherein the electrodes have a spiral shape or a curved shape.

6. The contact lens of any one of claims 4-5, wherein the electrodes comprise a first electrode mounted on an inner surface of the first substrate and a second electrode mounted on an inner surface of the second substrate.

7. The contact lens of any preceding claim, wherein the electrowetting control structure is configured to control the aperture in the contact lens in response to a control signal.

8. The contact lens of claim 7, wherein the electrowetting control structure is configured to receive the control signal from a mobile application.

9. The contact lens of any preceding claim, wherein the contact lens is configured to provide automatic control of the aperture in the contact lens based on ambient light conditions.

10. The contact lens of claim 9, wherein the electrowetting control structure is configured to automatically control the aperture in the contact lens in response to a control signal received from a sensor configured to sense ambient light level, the sensor being comprised by the contact lens or the sensor being an external sensor.

11. The contact lens of any preceding claim, wherein the first fluid is clear and the second fluid is black.

12. The contact lens of any preceding claim, wherein the reservoir is located in an outer rim of the lens body.

13. The contact lens of any preceding claim, further comprising a wireless charging circuitry.

14. The contact lens of any preceding claim, comprising two or more of said reservoirs for containing the second fluid.

15. A method in a contact lens comprising a first substrate and a second substrate, a first fluid in a space between the first substrate and the second substrate, a reservoir for containing a second fluid, wherein opacity of the second fluid is different from opacity of the first fluid, and an electrowetting control structure, the method comprising
automatically controlling size of an aperture in the contact lens by moving the first and second fluids within the contact lens by the electrowetting control structure.
